(19) Europäisches Patentamt
European Patent Office
Office européen des brevets

(11) Publication number: **0 140 344**
**A2**

# (12) EUROPEAN PATENT APPLICATION

(21) Application number: 84112896.0

(22) Date of filing: 25.10.84

(51) Int. Cl.[4]: B 23 K 35/22
B 23 K 35/36

(30) Priority: 31.10.83 US 546794
22.02.84 US 582515
11.09.84 US 649493
11.09.84 US 649494

(43) Date of publication of application:
08.05.85 Bulletin 85/19

(84) Designated Contracting States:
AT BE CH DE FR GB IT LI LU NL SE

(71) Applicant: SCM CORPORATION
925 Euclid Avenue
Cleveland, OH 44115(US)

(72) Inventor: Hwang, Jennie Shi-Lan
3439 Brainard Road
Pepper Pike Ohio(US)

(74) Representative: Baillie, Iain Cameron et al,
c/o Ladas & Parry Isartorplatz 5
D-8000 München 2(DE)

## (54) Paste vehicle for fusible powdered metal paste.

(57) There is provided a nonaqueous powdered metal paste composition and a vehicle therefor, characterized by resistance to slumping upon heating to the fusion point of the metal, including the powdered metal, and a nonaqueous organic liquid material having a surface tension of from 43 to 65 or higher dynes/cm. at 20°C.

EP 0 140 344 A2

Croydon Printing Company Ltd.

# IMPROVED FUSIBLE POWDERED METAL PASTE

This invention relates to a paste vehicle and a heat-fusible or sinterable metal powder. The vehicle is especially useful for making metalliferous pastes for joining by soft soldering, infiltrating, facing metal work, or for a molding purpose.

## BACKGROUND OF THE INVENTION AND PRIOR ART

The joining, infiltrating, or coating, or the manufacturing of many kinds of molded metal parts using a fusible metal powder-containing paste can be done efficiently, (often with automation) provided, however, that upon heating and before fusion of the metal, the metal powder containing paste exhibits controlled hot slump; in other words, the metal powder stays substantially where and as the paste was deposited on the substrate. This primary property has been difficult to obtain with conventional metal powder-containing pastes. The instant vehicles and pastes provide such property.

Restriction of flow of any resulting fused metal (that is a lack of general spreading), except into intended joints or pores, or to form intended joints as in the joining of copper-based or iron based metal parts, or in the infiltration of porous metal compacts such as steel compacts, or the adhering of electronic components to printed circuit boards or hybrid circuit board to avoid bridging in surface mounted device attachments, are other properties desired. The inventive products here can also provide desired restriction of metal flow on remelting. For most electronic soldering purposes at this time, the composition must be free of corrosive agents such as inorganic salts.

Brazing can be done with a paste of powdery powdered copper-based alloy or elemental copper-bearing, or with a cupreous so-called "silver solder". Facing applications, e.g., to coat, build-up or hard-face metal surfaces, can be done with pastes containing various metal or alloy powders, e.g., copper, copper-based, cobalt-based or nickel-based alloys, stainless steel, hardfacing

alloys, etc. In hard facing, the metal powder usually is heated to a mush state where liquid phase sintering of the metal occurs. Therefore, hard-facing powders can be considered here as essentially sinterable. Sometimes these pastes can contain particulate refractory materials such as alumina or silicon carbide for wear purposes. Infiltration of porous metal compacts, typically, steel compacts, call for fusion that will fill the pores of the compact with metal. Such pastes usually are copper-rich and contain a little iron, e.g., .01 to 6% by weight. Often a bit of refractory-providing material is used in them; the refractory material remains as a removable surface residue when the job is done. Molding applications, such as injection molding to make metal parts, can use a variety of metal powders in a paste vehicle. Most molded pastes here are formed of paste, then are heated to leave a sintered object. For efficiency and economy the vehicle weight proportion ordinarily is minor relative to that of the weight of fusible metal powder.

Soft solder pastes, for example, (melting below 400°C., preferably below 330°C) usually contain tin and lead; a little silver often is alloyed with the tin, particularly for electronic work, e.g., for making microelectronic connections. Soft solder pastes now are experiencing wider acceptance in industry, primarily because pastes are more readily adapted to automated manufacture and screen printing on a substrate than are the more conventional and manually effected solder bar, separate flux and iron, or solder wire (e.g., one containing the flux in a core within the wire) and an iron. The make-up of prior powder metal-containing paste compositions has been largely influenced by the prior practices particularly in respect of fluxing or surface preparing agents. These have comprised substantial portions of organic acids, e.g., rosin acid, inorganic salt materials, e.g., zinc chloride, ammonium chloride, borax and the like, and rosin-based fluxes.

Soft solder compositions have not been entirely satisfactory in a number of respects. First, because of the presence of inorganic salt fluxes they have tended to be corrosive to the base metal or to introduce water as water of hydration leading to spattering. This problem was alleviated to a great extent with rosin-based flux

vehicles. However the rosin-based fluxes or vehicles permit excessive movement of the solder particles away from the deposition site on heating; they also often give rise to sputtering and "dewetting" which leaves a residue as a halo around the solder joint. Their solder pastes have been prone to excessive solder balling, i.e., the formation of discrete minute balls of soft solder. This is highly undesirable and leads to electrical bridging across what should be electrically isolated connections especially on printed circuit boards.

In a preferred embodiment of a soft solder composition an alkali solubilized in a polyhydric alcohol, e.g., glycerine, acts as a fluxing agent and improves solderability. For best results herein, in a soft solder metal powder, a slump control system and an inorganic salt-free fluxing system are present. The compositions hereof are practically noncorrosive and easy to formulate and handle. They are readily adaptable to screen printing. Disadvantages attendant prior compositions, such as spattering due to evolution of water vapor, solder balling and bridging, corrosivity, dewetting, tenacious residue, failure of the solder to melt due to excessive oxidation, etc., are not observed in the metal-bearing pastes here. "Inorganic Metal Salts" are metal or ammonium salts Lange's "Handbook of Chemistry", 10th Edition, pp. 209-333.

To better understand the applications of solder pastes, reference may be had to "Technology of Electronic Grade Solder Pastes" Taylor et al, Solid State Technology, September 1981, pages 127-135.

One prior paste composition is disclosed by Knoth U.S. Patent 1,772,952. This paste comprises a solder metal powder, an amine and a binder or vehicle such as vaseline. These compositions do not, however, possess antislump properties which are currently in demand in the electronics industry. U. S. Patent 2,493,372 to Williams dated 3 January 1950 discloses a paste composition including a metal powder, e.g., tin-lead, a salt flux, and a C, H and O compound. Reference may also be had to U. S. Patent 3,954,494 dated 4 May 1976 which discloses a wax-flux composition. U. S. Patent 804,664 also shows a tin-lead metal powder paste in a vaseline - glycerine - inorganic salt flux system.

Another solder paste composition comprising powdered solder, a resin, a salt of an amino acid ester and a solvent is discussed by Melchiors et al in Patent 3,065,538 dated 27 November 1962.

Another aqueous base solder composition is shown by Johnson in Patent No.: 3,073,270 dated 15 January 1963.

Also exemplary of prior solder paste compositions is the patent to Petersen et al 3,925,112 dated 9 December 1975. According this invention, there are provided emulsified self-cleaning soldering fluxes having an aqueous phase including from 2 to 30 pbw (parts by weight) of a water soluble hydrazine salt and an oil phase including from 5 to 50 parts of a mixture of petrolatum and wax. Also provided are water solutions of 2 to 30 pbw of the water soluble hydrazine salt, up to 5 parts of a vegetable gum thickener, a wetting agent and the balance water.

Another prior paste composition is disclosed by Mastrangelo in U. S. Patent 4,273,593 dated 16 June 1981. This paste comprises a solder metal powder and a vehicle, the latter being a hydroxypropyl cellulose blended with glycerine and/or water and further blended with a mixture of polyalkoxyalkanols.

It has now been found that an improved vehicle for the instant powdered metal pastes is provided as an essentially nonaqueous vehicle medium comprising a normally liquid nonaqueous organic liquid as an antislump agent, usually and preferably a polyhydric alcohol system, characterized in that the liquid has a minimum surface tension of 43 dynes/cm (20°C.), and generally from 43 to 65 or higher dynes/cm. Such system provides a slump control property to the metal bearing paste such that when it is heated toward the melting point of the soft solder metal powder, e.g., 118°C. to 325°C., the shape of the deposit is substantially maintained until the metal fuses. Although as will be seen from Table I below, and nonaqueous liquid having a surface tension above 43 dynes/cm. may be used in the vehicles hereof, polyols are the most practical antislump materials and the invention will be described with reference to polyols for convenience.

These vehicles also desirably include a low surface energy material such as a hydrocarbon. The hydrocarbon, which is preferably solid or semi-solid (e.g., grease-like) melts, of course, and wets the substrate around the deposit, but carries no significant amount of the metal particles with it. Apparently, the antislump system remains behind and provides a cohesive force for the powdered metal. Although hydrocarbons having melting points above 15°C. are preferred, in certain embodiments normally liquid hydrocarbons such as hexane, cyclohexane, toluene or mixtures thereof, e.g., mineral spirits, may be used. The high surface energy material serves as a binder under heat conditions to hold the particles in position. Also the hydrocarbon is easily cleaned, along with any residue that may be left, away from the joint or surrounding area. The hydrocarbon by itself is incapable of imparting slump control properties to a powdered metal contained therein. In the preferred powdered metal compositions especially adapted for screen printing, no dewetting is observed. Surprisingly, even after melting, the fusible metal resists running from the site of application. Of course, in soft solder compositions there is also need for a fluxing agent. Such agent serves to clean the surfaces of the substrate or joining metal as well as the solder particles, and to inhibit the formation of oxide coating on the solder particles as the temperature is elevated toward melting.

The desirable properties of antislump, anticorrosion and freedom from spattering in the metal-bearing pastes here are not observed in prior compositions known to me. Other additives may desirably be present as will be pointed out below. The instant pastes have no water in them other than insignificant amounts possibly present as an adventitious impurity that might be associated with good quality technical grade ingredients. No water is added deliberately as such or as a hydrate; so it can be said that the instant pastes and vehicles are "nonaqueous" as a practical matter. Also, it has been found that the high surface tension liquid, i.e., the polyol, can be a single component vehicle or a part of a multicomponent vehicle, i.e., including also a hydrocarbon. The substrate on which the paste is deposited has no significant effect on the hot slump resistance.

BRIEF STATEMENT OF THE INVENTION

Briefly stated, the present invention is a nonaqueous or anhydrous inorganic salt-free, powdered metal paste composition comprising a major amount of a metal powder and a minor amount of a paste vehicle containing an antislump composition including a nonaqueous liquid having a surface tension above 43 dynes/cm. at 20°C. and preferably a polyol containing from 2 to 8 carbon atoms and having a surface energy of from 43 to 65 or higher dynes/cm. (20°C.). Preferably these pastes also include a paste forming vehicle ingredient which is a hydrocarbon. For soft solder compositions a fluxing ingredient is present.

To further extend the utility of the metal or metal alloys, there may be added other ingredients, such as, one or more surfactants, one or more condensed or fused ring aliphatic acids, e.g., cholic acid or abietic acid or rosin acids, and one or more plasticizers such as di-n-butyl phthalate. The pastes including a powdered soft solder alloy form a shiny and coherent (i.e. coalesced) solder pool in a controlled area of application.

DETAILED DESCRIPTION OF THE INVENTION

It has been found that slumping of a paste composition containing a major amount of a powdered metal or metal alloy can be effectively controlled by a unique composition composed of a hydrocarbon or a mixture of hydrocarbons, e.g., petrolatum, and a polyhydric material, e.g., glycerine and sodium hydroxide. The combination of a hydrocarbon having a melting point of at least 15°C. and less than the melting point of the metal, and a polyhydric alcohol, such as a di- or triethanolamine, or glycerine, or pentaerythritol, or the like, is however, effective in maintaining quite substantially the profile of the paste as it was initially deposited on the surface or substrate. A solder paste requires, however, a flux. At the fusion point, the metal in the present compositions has not run or spattered or balled up into small discrete balls of molten metal prior to the fusion of the entire mass. A polyhydric alcohol or polyol alone

0140344

also is capable of conferring this property upon a paste composition containing a major amount of a metal or a metal alloy. However, such a composition while useful with high melting powdered metals, is unsatisfactory as a soft solder composition, requiring also a suitable hydrocarbon diluent and a noncorrosive flux.

To form a solder paste, the vehicle portions hereof are blended with a powdered metal to the extent of from 75% to about 93% metal by weight of the paste, and desirably from 80% to 90%, and preferably about 85% powdered metal. The particle size of the powdered metal is desirably such that it will not settle out of the vehicle which is quite viscous (20,000 to 200,000 cps., Brookfield No. 7 spindle at 20 rpm) on standing. In general, for soft solder compositions the particle size is less than 100 mesh (U. S. Standard Sieve Size), desirably - 200 + 400 mesh. A mixture of various sizes and/or shapes of metal powders often is advantageous for achieving desired rheology and other paste properties in these applications. Solder powder particles are available in two forms, i.e., those having irregular shape and those having spherical shape. Either shape, or a mixture thereof may be used, although the spherical shape is desired. Where normally liquid hydrocarbon diluents are used, e.g., toluene, the particle size of the solder powder should be less than about 10 microns in order to minimize settling. Typically a brazing (or "silver soldering") paste will contain about 65-75 pbw metal powder of -150 mesh size, an infiltration paste 80-90 pbw metal powder of -100 mesh size, a facing paste 60-90 pbw metal powder of -100 to -200 mesh size, and a molding paste (as for injection moding) 85-90 pbw of metal powder of -400 mesh size. In each case the balance of 100 pbw is made up with the vehicles hereof. A mixture of various sizes and/or shapes of the particles in the metal powders often is advantageous for achieving desired rheology and other paste properties in these applications.

Preparation of the vehicle and paste is achieved with conventional stirring or blending means. Warming can be done, if necessary or desired, to facilitate by dissolving or melting ingredients

together for putting them into very intimately dispersed condition and/or otherwise making a multiphase dispersion with the ingredients in a very fine state of subdivision preparatory to blending with the metalliferous powder to form a mass of paste consistency. Preferred compositions for soft solders include additional fluxing agents, optionally a surfactant, optionally an organic carboxylic acid, and optionally a diluent; i.e., a plasticizer and/or solvent. Each of these ingredients will be discussed below. Thereafter, the metals or metal alloys will be discussed followed by general processing techniques, and specific examples.

## THE HYDROCARBON INGREDIENT

Hydrocarbons are preferred ingredients for the metal paste compositions hereof. Fluorinated hydrocarbons or chlorofluorinated hydrocarbons may be used to replace part or all of the hydrocarbon. The useful materials range in melting point from below about room temperature to normally solid materials, e.g., petroleum hydrocarbon waxes containing from 18 to 60 or more carbons and melting in the range of 28°C. to 100°C. The useful hydrocarbons also have a very low ash or solid residue content and either melt and flow, sublime and/or thermally decompose at a temperature below the melting point of the solder (i.e., below 330°C.). The amount of ash or solid residue from the hydrocarbon remaining at the melt temperature should be less than 0.5% and preferably less than 0.1%. The useful hydrocarbons may be paraffinic, aromatic, or mixed aromatic paraffinic or mixtures of compounds of such characteristics, and include various mixtures of hydrocarbons, e.g., octadecane, mineral spirits, paraffin wax, and petrolatum, e.g., Vaseline. Synthetic hydrocarbons normally solid or semi-solid include commercially available polyethylenes, polypropylenes, poly(ethylene-propylene), polybutenes, poly(ethylene-styrene), hydrogenated nonpolar polymeric hydrocarbons having Ring and Ball softening points of from 15°C. to 130°C., such polymers having a molecular weight less than about 1500 and preferably less than 1000, hydrogenated polyterpenes, etc. The best material known to me for use herein is petrolatum. Halogen substituted hydrocarbons, e.g., fluorocarbons and chlorofluoro carbons may also be used, they also being relatively inert at the temperatures encountered.

"Petrolatum" is a well known colloidal system of nonstraight-chain solid paraffinic hydrocarbons and high boiling liquid paraffinic hydrocarbons, in which most of the liquid hydrocarbons are held inside the micelles. A detailed historical account including the chemistry of petrolatum and modern manufacturing methods is found in Drug and Cosmetic Industry, Vol. 89, 36-37, 76, 78-80, and 82, July 1961. "Petrolatum for Drugs and Cosmetics" Schindler. Petrolatum is typically a yellowish to amber or white semisolid, unctuous mass, practically odorless and tasteless. It has a density at 25°C. of from 0.820 to 0.865, a melting point of 38° to 54°C., and a refractive index $\eta$ 60/0 of 1.460 - 1.474. It is readily commercially available under the well known proprietary marks Vaseline, Cosmoline, Stanolene, Penreco brand petroleum jelly as well as other convenient trade designations. Petrolatum may be used in its commercially available form or it may be modified by the addition of petroleum wax or paraffin wax in particulate form, e.g., microcrystalline wax.

The hydrocarbon ingredient is utilized in an amount which ranges from 10 to 90 pbw of the vehicle system, or 0.7% to 22.5% of the solder paste. A nonaqueous organic liquid having a surface energy in the range of 43 to 65 or higher dynes/cm appears to be essential for the slump control characteristics of the present powdered metal pastes. Although water has a high surface energy as does sulfuric acid, these materials are not satisfactory because of spattering or reactivity at elevated temperatures.

SLUMP CONTROL SYSTEM

As indicated above, the ability of a powdered metal paste to resist hot slump, or running during softening and melting is essential in various applications such as molding, casting, infiltrations, coating and in modern microelectronic processing and particularly silk and stencil screening of soft solder pastes. It has been found that a combination of a hydrocarbon as above defined and particularly petrolatum, and a nonaqueous organic liquid having a surface tension at 20°C. greater than 43 dynes/cm., and preferably one or more

polyhydric alcohols containing 2 to 6 OH groups and having a surface tension or energy of from 43 to 65 or higher dynes/cm at 20°C., is effective in providing a good paste and in preventing slumping of the metal particles. The hydrocarbon alone with powdered metal composition appears incapable of conferring this property to any degree. Nonaqueous organic liquid alone gives sufficient antislump properties but in the case of soft solders, insufficient soldering properties. Soft solder pastes also require a flux and to obtain the noncorrosiveness required in modern electronic applications the flux should not be an inorganic salt, e.g., $ZnCl_2$, $NH_4Cl$, or borax, the latter being highly hydrated and thus given to spattering.

The antislump agents hereof are generally polar compounds.

A detailed mechanism of the antislump properties of this combination is obscure at present.

Table I below gives specific examples of liquids of various kinds useful in inhibiting slump.

The polyols useful herein are aliphatic and normally liquid or of relatively low melting point, i.e., below about 170°C. and include ethylene glycol, diethylene glycol, propylene glycol, dipropylene glycol, sorbitol, mannitol, trimethylolethane, trimethylolpropane, diethanolamine, triethanolamine, pentaerythritol, and erythritol. These polyols coact with a hydrocarbon, especially petrolatum in the absence of water and in the presence of a finely divided metal powder to control slumping on heating and to provide a satisfactory paste medium. A fluxing agent either as a separate ingredient, e.g., sodium hydroxide, or as a moiety of the polyol (e.g., triethanolamine or diethanolamine) must be present. The secondary or tertiary amine group appears to be suitable for fluxing. The polyol is generally insoluble in the hydrocarbon. The amount of liquid polyol constitutes from about 0.5% to 10.0% by weight of the vehicle and powdered solder metal composition.

A comparative study of various agents in 88.9% powdered metal compositions demonstrates the significance of the limitation respecting surface energy or surface tension.

TABLE I

Slump/Resistance Study

(For 60% Sn; 40% Pb Powdered Metal)*

| Surface Tension (Dyne/Cm) | Antislump Agent | Slump Resistance | Remarks |
|---|---|---|---|
| 63.4 | 7% NaOH/93% Glycerine | Yes | Fluxing occurred |
| 63.4 | Glycerine | Yes | No fluxing |
| 58.2 | Formamide | Yes | Little fluxing occurred |
| 55.1 | Conc $H_2SO_4$ | Yes | Oxidizing occurred |
| 50.8 | Methylene Iodide | Yes | P/M turned green |
| 48.4 | Triethanolamine | Yes | Fluxing occurred |
| 48.5 | Diethanolamine | Yes | Fluxing occurred |
| 48.3 | Monoethanolamine | Yes | |
| 47.7 | Ethylene Glycol | Yes | Little fluxing occurred |
| 45.2 | Triethylene Glycol | Yes | " |
| 44.0 | Tetraethylene Glycol | Yes | " |
| 44.5 | Polyethylene Glycol 200 | Yes | " |
| 44.5 | Polyethylene Glycol 600 | Yes | " |
| 42.9 | Aniline | No | |
| 40.9 | Phenol | No | Solid Chemical |
| 38.0 | Pyridine | No | |
| 36.8 | Nitromethane | No | |
| 32.7 | Acetic anhydride | No | Oxidizing occurred |
| 32.5 | Oleic acid | No | |
| 32.3 | Carbon Disulfide | No | |
| 27.8 | Acetic acid | No | Oxidizing occurred |
| 27.5 | n-Octyl alcohol | No | |
| 25.5 | Cyclohexane | No | |
| 24.2 | Ethyl bromide | No | |
| 23.0 | i-Butyl alcohol | No | |
| 20.7 | t-Butyl alcohol | No | |
| ---- | Vaseline | No | |

*NOTE: 1. Formula used for slump resistance studies: 88.9% (97.5% Pb; 1.0% Sn; 1.5% Ag) + 7.8% Vaseline + 3.3% Antislump agent.

Paste was examined on Cu coupon at designated temperature.

Table II below shows the hot slump effect on a solder composition using the "antislump agent" as the sole vehicle.

TABLE II

Slump/Resistance Study

(60% Sn; 40% Pb/Single Phase Vehicle System)

| Surface Tension (Dyne/Cm) | Antislump Agent | Slump Resistane | Remarks |
|---|---|---|---|
| 63.4 | 7% NaOH/93% Glycerine | Yes | Excellent Soldering |
| 63.4 | Glycerine | Yes | |
| 55.1 | Conc $H_2SO_4$ | Yes | Oxidizing Occurred |
| 50.8 | $CH_2I_2$ | Yes | |
| 48.9 | Triethanolamine | Yes | |
| 47.7 | Ethylene Glycol | Yes | |
| 40.9 | Phenol | No | Solid Chemical |
| 38.0 | Pyridine | ---- | P/M ppt'd quickly |
| 27.5 | n-Octyl alcohol | ---- | P/M ppt'd quickly |
| ---- | Vaseline | No | |

Note: 1. Paste was examined on Cu coupon at 235°C.

2. The vehicle NaOH/glycerine also provided good slump resistance for Nordox Red Cuprous. ($Cu_2O$).

Table III below shows the effect of temperature on hot slump resistance with selected polyols and other additives.

TABLE III

Slump/Resistance Study

(Temp. Effect)

| Surface Tension (Dyne/Cm) | Antislump Agent | Temp. (°C) at Test | Slump Resistance |
|---|---|---|---|
| 48.9 | Triethanolamine | 150 | Yes |
| | | 235 | Yes |
| | | 325 | Yes |
| 44.5 | Polyethylene Glycol 200 | 150 | Yes |
| | | 235 | Yes |
| | | 325 | Yes |
| 42.9 | Aniline | 150 | No |
| | | 235 | No |
| | | 325 | No |
| 38.0 | Pyridine | 150 | No |
| | | 235 | No |
| | | 325 | No |

Note: 1. Formula used for slump resistance studies: 88.9% (97.5% Pb; 1.0% Sn; 1.5% Ag) + 7.8% Vaseline + 3.3% Antislump agent.

Paste was examined on Cu coupon at designated temperature.

2. When the paste was examined on substrate which has been surface treated with FC-723* (surface tension 11 dyne/cm), the slump resistance behavior was still about the same as that on the Cu coupon.

*Fluorad FC-723 is an oleophilic, hydrophobic fluorocarbon in an inert vehicle having a specific gravity of 1.78 produced by 3M.

FLUXING SYSTEM

As indicated above, there must be present a noncorrosive anhydrous fluxing system in a soft solder paste composition hereof. The fluxing system may be a single chemical specie dissolved or dispersed in the hydrocarbon/polyol system. Alternatively, the fluxing system may comprise a plurality of fluxing agents dissolved or dispersed in the hydrocarbon/polyol system. Best results have been secured with alkali or basic reacting fluxing agents, and particularly alkali metal hydroxides. These can be used as solutions in the polyol or as alcoholates of a monohydric or polyhydric alcohol, e.g., methyl, ethyl or isopropyl alcohol, dissolved in the polyol, or the alkali metal salt of the polyol, e.g., sodium glycerate.

The alkali metal hydroxide in such component is a preferred noncorrosive fluxing agent and is effective in a proportion of about 0.1-5% by weight of the vehicle, and, advantageously, 0.25-3.5%. The liquid polyol can constitute from about 0.5 to 75.0% by weight of the vehicle, and, advantageously, about 40%. On the basis of the entire solder paste, the amount of polyol ranges from about .3 to 18.8%. The alkali metal hydroxides useful herein include in descending order of preference sodium hydroxide, potassium hydroxide, lithium hydroxide and cesium hydroxide. Such alkali metal hydroxides have a limited solubility in polyhydric alcohols or mixtures of same that are liquid and are conveniently used in concentrations at or near the limit of solubility, i.e., less than about 10% by weight of the polyol. As indicated, they can be present as an alkali metal alcoholate, e.g., sodium ethylate, dissolved or well dispersed in the polyol, the alcoholate being equivalent to the hydroxide. The polyhydric alcohols include glycerine (which is preferred), ethylene glycol, diethylene glycol, propylene glycol, sorbitol, mannitol, pentaerythritol, erythritol, etc., containing from 2 to 6 OH groups. A sodium hydroxide/glyerine solution is particularly effective and may be used as the sole fluxing agent, or it may be used in combination with an alkanolamine, e.g., triethanolamine or diethanolamine to provide

effective fluxing systems for the instant pastes.

A useful fluxing ingredient is also provided as an amine component of the vehicle. Such component is effective in a broad proportion, e.g., about 2-40% by weight of the vehicle and, advantageously 3-10%. The essential functional group of this component is an

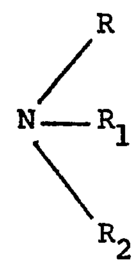

wherein R, $R_1$, and $R_2$ are independently selected from hydrogen, alkyl, alkylene, cycloalkyl, cycloalkylene, carboxyalkylene, aminoalkylene, hydroxyalkylene, carbonylalkyl, etc., no more than two of R, $R_1$ and $R_2$ being hydrogen. The alkyl and cycloalkyl groups may contain from 1 to 30 carbon atoms. The amine component may contain one to three amino groups. A particularly useful group of amine compounds is the water soluble alkanolamine group including mono-, di, and trimethanolamines, mono-, di-, and triethanolamines; mono-, di-, and tripropanolamines, and mixtures of the mono-, di-, and trialkanolamines. Alkyl and cycloalkyl amines, particularly the $C_2$-$C_{18}$ mono and polyamines, e.g., triethylamine, tri-isopropylamine, diethylamine, mono-n-butyl amine, propylene diamine cyclohexylamine, cyclopropyl methylamine, tetramethylene diamine, rosin amine, cyclohexylamine hydrochloride, cyclohexylene amine, diaminoethylamine, diaminopropylamine, etc. Thus, the kind and configuration of the amino compounds useful herein are very broad and results among the examples are reasonably equivalent for fluxing. Amidino and guanidino fluxing agents, advantageously aliphatic ones, can be considered as useful amines for the instant purpose. Aromatic amines, while functional, often impart toxicity and therefore are not favored. Similarly, pyridine-type materials, such as, pyridine or a lutedine

give off intensely objectionable odors and are not favored, but could be considered functioning like amines here. The preferred amines are the alkanolamines. Also useful to supplement the base system are the amino acids, particularly the water soluble aminoacids, e.g., aminoacetic acid, beta- aminopropionic acid, (beta-alanine) aminobutyric acids, epsilon- aminocaproic acid, N-methyl glycine, betaine, alpha-delta-diaminovaleric aliphatic carboxylic acids. Thus, urea, propionamide, butanamide, 2,2-dimethylpropion-amide, N-methylpropionamide, N,N-beta-trimethylbutyramide, steroyl-amide, etc., can be such base system supplements.

## OTHER VEHICLE INGREDIENTS

Organic carboxylic acids are useful as fluxing and/or solderability ingredients, particularly in a supplemental role in combination with the other ingredients described above. Any high boiling (above 300°C.) aliphatic carboxylic acid may be used. I prefer, however, to use condensed ring acids such as abietic acid, cholic acid, rosin acids, polymerized rosin acids, hydrogenated rosin acids rosin esters disproportionated rosin ester gum, wood rosin, gum rosin, tall oil rosin, or fatty acids such as stearic acid, oleic acid, etc. Fatty amine and fatty acid compounds are also useful in this capacity. Examples include N-tallow-1,3-diamino-propane, 3-diaminopropane dioleate, etc. The acids are used in small amounts of from 0.5 to 10% by weight of the vehicle composition, or on the basis of the fully formulated solder paste, from about .03% to about 2.5%.

It has also been found that a surfactant may be advantageously included in the vehicles hereof. Although such surfactant or wetting agent may be anionic, cationic, amphoteric, or nonionic, nonionic agents are preferred. Many surfactant materials are known. They are used in the present vehicles to help to control the rheological properties, shelf-life stability, air voids, etc. The amount used

is determined by cut and try and is that amount which is sufficient to impart the desired control. These agents assist in the dispersion of the powdered metal and in carrying the fluxing agent to the surfaces being joined or coated. Generally less than 10% by weight each of other ingredients is used and usually from .01% to 5% by weight of the vehicle or 0.001% to about 4.5% of the solder paste.

Specific surfactants include the alkylarylpolyether alcohols, ammonium perfluorinated carboxylates, fluorinated alkyl esters of fatty acids, acetylenic glycols (which sometimes can act as a defoamer), polyoxyethylene sorbitan monostearate, etc. Surfactants commonly used in solder pastes may be used herein.

Solvents and/or diluents may also be present in the vehicle compositions hereof. For example, when a paste containing powdered solder metal is to be used in a screen printing process, solvents are conveniently used to adjust the viscosity to a satisfactory level. Solvent materials are desirably volatile, at least at the melting point of the solder alloy. Any solvent including low molecular weight alcohols, e.g., ethyl or propyl, isopropyl, butyl, amyl, cyclohexyl, terpene alcohols, etc.; ketones, e.g., methyl ethyl ketone, methyl isobutyl ketone; 2-butoxyethanol-1, ethylene glycol dimethyl sulfoxide, hydrocarbons, e.g., kerosene, terpene hydrocarbons, hexane, cyclohexane, heptane, octane, naphthas such as mineral spirits, ethyl acetate, amyl acetate, etc. The solvent ingredients may also include higher boiling materials commonly regarded as plasticizers such as dibutyl phthalate, tricresyl phosphate, etc.

The selection of the solvent and/or diluent is controlled by the end use, cost, environmental factors, desired plasticity, etc. The solvent or diluent may be water soluble or substantially water insoluble. The solvent or diluent leaves the system after application to a substrate as in screen printing, the residue being the solder paste composition hereof.

Minor amounts of known odorants, bactericides, fungicides, etc., may also be included in the vehicles hereof if desired. Amounts of such ingredients usually range from about 0.1 to 2% by weight of the vehicle.

From time to time, it is desirable to include in the compositions of the present invention, particularly in the case of silver solder brazing pastes an inorganic fluxing agent such as a metallic halide, for example, zinc chloride, tin chloride, aluminum chloride, or ammonium chloride. Such an agent may be present in an amount ranging from about .5 to 5% by weight of the vehicle and is useful in cleaning the surface to be treated of the metal or metal alloy. Such oxidation, unless removed, destroys the integrity of the coating or juncture between the metals involved.

At the metal fusion temperatures encountered herein all organic ingredients are removed from the system either by volatilization or decomposition.

## PREPARATION OF THE VEHICLES

The simplest preparation of the vehicles hereof involves only effective mechanical mixing of the ingredients into the petroleum hydrocarbon ingredient, e.g., petrolatum.

The hydrocarbon can, if desired or necessary, be heated to melt it and facilitate the blending operation, and warming of some of the other ingredients also can be of help. It is not necessary that the mixture be a solution. The paste-like vehicle can be cloudy and contain one or more phases with the disperse phase fine enough so that it will not separate substantially on standing.

The materials discussed in detail above are considered to be ingredients of the vehicles hereof.

THE METAL POWDER

For making a paste, the metal powder is comminuted so that it is easily and stably dispersed in the vehicle by grinding, ball milling, paddle blending, ribbon blender, etc. The powder should pass through a 20 mesh screen (U. S. Sieve Series) (841 microns). Typically, the powder is finer than 100 mesh (149 microns) because larger particles are difficult to disperse and maintain in suspension in the paste. For most applications, a particle size in the range of -150 + 400 mesh (U. S. Sieve Series) is preferred. For most purposes, from 3 to 20 parts by weight of metal powder is blended with 1 part by weight of vehicle. I prefer to use spherically shaped particles, although irregular particles or flakes may be used. The paste compositions hereof generally will have a viscosity in the range of 20,000 cps. to 200,000 cps., Brookfield No. 7 spindle at 20 rpm. The preferred apparent viscosity will depend on the method of dispensing or application of the paste to the materials to be joined. Hand trowelling pastes are more satisfactory at the higher apparent viscosities than pastes intended for automatic dispensing such as extruding, flowing or spraying, or those which are most suited for application by a screen printing process. Viscosity can be controlled easily by the amount of solvent or solvent mixture and/or plasticizer employed in the vehicle, or by the vehicle to powder ratio. Pastes often are degassed at reduced pressure.

Solder compositions useful herein as the metal powder for blending with the above described vehicles to form a paste, or for extrusion of a hollow wire for making a cored solder wire, are well known. A number of representative compositions useful herein are given in the Taylor et al article, supra. In general the solder compositions have a melting point in the range of from about 118°C. to about 330°C. and comprise tin together with lead and/or silver. Other metals such as zinc, aluminum, bismuth, cadmium, nickel, indium and cadmium may also be used in the solder compositions.

For making a solder paste, the metal powder is comminuted so that it is easily and stably dispersed in the vehicle by grinding, ball milling, paddle blending, ribbon blender, etc. The entire powder should pass through a 50 mesh screen (U. S. Sieve Series) (297 microns). Typically, the powder is finer than 100 mesh (149 microns) because larger particles are difficult to disperse and maintain in suspension in the paste. A particle size in the range of -200 + 400 mesh (U. S. Sieve Series) is preferred. Even smaller particle sizes, i.e., 10 microns or less are desired where normally liquid hydrocarbons are used in the vehicle as in silk screening paste compositions. For most purposes, from 3 to 20 parts by weight of solder metal powder is blended with 1 part by weight of vehicle. The paste compositions hereof generally will have a viscosity in the range of 20,000 cps to 200,000 cps. The preferred apparent viscosity will depend on the method of dispensing or application of the solder paste to the materials to be joined. Hand trowelling pastes are more satisfactory at the higher apparent viscosities than pastes intended for automatic dispensing such as extruding, flowing or spraying onto a substrate or those which are most suited for application to a substrate, e.g., a printed circuit, by a screen printed process. Viscosity can be controlled easily by the amount of solvent or solvent mixture and/or plasticizer employed in the vehicle, or by the vehicle to powder ratio. Pastes often are degassed at reduced pressure.

In fabricating cored solder wire, conventional procedures are used substituting a vehicle of the present invention for a conventional core composition such as a rosin based paste.

Effective control of hot slump in powdered metal pastes is demonstrated by the following specific examples. These examples are intended to enable those skilled in the art to apply the principles of this invention in practical embodiments, but are not intended to limit the scope of the invention. In this specification all temperatures are in degrees Celsius unless otherwise stated, all parts, percentages, and ratios are by weight unless otherwise expressly stated, and sieve sizes are for the U. S. Standard Sieve series.

Testing for resistance to hot slump of a metal-containing paste was done by applying a deposit of the paste (about 5 mm diameter by 4-5 mm high) by spatula to a copper coupon, then gradually and automatically warming the coupon with a Browne Corporation reflow instrument (in effect an automated travelling hot plate) from room temperature to fusion in about a half-minute to a minute. The thus - heated deposit was observed visually for collapse of the metal prior to its fusing as the vehicle disappeared therefrom. Significant collapse of particulate metal of the deposit prior to its fusion would indicate hot slump. None of the exemplary pastes given below showed significant hot slump. In the case of solder paste the spreading of molten metal from the deposit area was also observed in the same test. None of the exemplary tin-containing solder pastes given below showed significant spreading over the coupon; all had desirably restricted flow. Great spreading away from the locus of application is undesirable for many applications such as soldering in the manufacture of electronic devices.

In the examples the petrolatum indicated as Petrolatum A was Vaseline brand petroleum jelly, Vaseline being the trademark of Chesebrough Manufacturing Co., Inc. for USP petrolatum sold at retail for household use. The other petrolatums used were Penreco USP petrolatums, Penreco being the trademark of Pennzoil Co.; Petrolatum B was their Regent grade white petrolatum (Melting Point 118-130°F.); Petrolatum C was their Royal grade (Melting Point 118-130°F.); and Petrolatum D was their Amber grade (Melting Point 122-135°F.).

In the following examples the following designations have the following identities:

Triton* N-60 = alpha-(nonylphenyl)-omega-hydroxy-poly(oxy-1,2-ethanediyl), (Registry No.: 9016-45-9).

*The trademark of Rohm & Haas Company

---

Armeen* HT = bis(hydrogenated tallow alkyl)amine,

Armeen* RC = bis($C_{14}$-$C_{16}$ hydrocarbon alkyl)amine,

Duomeen* T = N-tallow trimethylene diamine, and

Duomeen* TDO = N-tallow trimethylene diamino dioleate, respectively.

*The trademarks of Akzona, Inc.

---

PEG* 6000 DS = alpha-(1-oxooctadecyl)-omega-[(1-oxo-octadecyl)oxy] poly(oxy-1,2-ethanediyl), (Reg. No.: 9005-08-07),

PEG* 6000 = alpha-hydro-omega-hydroxy-poly(oxy-1,2-ethanediyl), Reg. No.: 25322-68-3,

Carbowax* 3350 = a polyoxyethylenic wax,

n-Hexyl Carbitol* = diethylene glycol mono n-hexyl ether, and

Butyl Carbitol* = diethylene glycol monobutyl ether, respectively.

*The trademarks of Union Carbide Corp.

---

| | | |
|---|---|---|
| Fluorad* FC-340 | = | a liquid fluorocarbon. |
| | | *The trademark of 3M Company |

---

| | | |
|---|---|---|
| Surfynol* 104E | = | 5-decyne-4,7-diol,2,4,7,9-tetramethyl, Reg. No.: 126-86-3. |
| | | *The trademark of Air Products and Chemicals, Inc. |

---

| | | |
|---|---|---|
| Dowanol* DM | = | 2-(2-methoxyethoxy)ethanol, (Reg. No. 111-77-3), and |
| Dowanol* DE | = | 2-(2-ethoxyethoxy)ethanol, (Reg. No. 111-90-0), respectively. |
| | | *The trademarks of Dow Chemical Company |

---

Pastes tabulated below were made by blending the noncorrosive fluxing ingredients, metal powder and other solderability ingredients with petroleum hydrocarbon in a molten condition, then blending in the other vehicle ingredients when the mass cooled to 32°. The specification for the solder powders was 5% max. +200 mesh, 4% max. -325 mesh. The formulations were evaluated according to standards established for electronic grade solder pastes. Accordingly, although some of the exemplified pastes may not have met all the electronic grade criteria, they were operative for other utilization such as for making a joint using a trowel to apply the paste. Of the exemplified solder pastes, those preferred for microelectronics work showed no solder balling.

In the solder tests no spattering was observed during heating to effect melting, and no significant hot slump or solder

spreading was observed that is, they had good restriction of flow. Furthermore, there was no dewetting in evidence on the copper substrate, and cleaning of a joint easily could be had with a suitable organic solvent, e.g., a petroleum naphtha, alcohol, etc.

By way of contrast 20 parts of a prior art fluxing composition (specifically that of Example 1 of U. S. Patent 3,925,112, which patent discloses some petrolatum as one of the ingredients in the oily phase of an aqueous soldering flux emulsion) was compounded with 80 parts of solder alloy powder herein exemplified in the same manner as the pastes herein exemplified; resistance to hot slump was not demonstrated nor was restricted flow (spreading) of melted solder, and there was considerable spattering.

Alloy Powder: 97.5 Pb/1 Sn/1.5 Ag

| Example No. | 1 | 2 | 3 | 4 | 5 | 6 | 7 |
|---|---|---|---|---|---|---|---|
| % Metal Components | 80.0 | 85.0 | 85.0 | 85.0 | 85.0 | 93.0 | 93.0 |
| Petrolatum A | 12.3 | 10.5 | 10.5 | 10.5 | 10.5 | 5.0 | 5.0 |
| Triethanolamine | 6.2 | 3.7 | 3.7 | 3.7 | 3.7 | 2.0 | |
| 7% parts NaOH dissolved in 93 parts Glycerine | 1.4 | | | | | | |
| Triton N-60 | 0.1 | | | | | | |
| Armeen HT | | | | 0.8 | | | 2.0 |
| Armeen RC | | 0.8 | | | | | |
| Duomeen T | | | 0.8 | | | | |
| Duomeen TM | | | | | 0.8 | | |

Alloy Powder: 97.5 Pb/1 Sn/1.5 Ag

| Example No. | 8 | 9 | 10 | 11 | 12 | 13 | 14 |
|---|---|---|---|---|---|---|---|
| % Metal Components | 85.0 | 85.0 | 90.0 | 85.0 | 85.0 | 85.0 | 85.0 |
| | | | | | | | 12.0 |
| Petrolatum A | 8.0 | 10.0 | 5.6 | 5.0 | 5.0 | 5.0 | 2.7 |
| Triethanolamine | 1.9 | 1.0 | 3.3 | 0.8 | 0.8 | 0.8 | |
| Glycerine | 0.4 | 0.2 | 0.5 | 0.9 | 0.9 | 0.9 | 0.3 |
| Cholic Acid | 1.4 | 1.5 | 0.6 | | | | |
| PEG 6000 | 1.9 | 0.8 | | | | | |
| n-Hexyl Carbitol | 1.4 | 1.5 | | 8.3 | | | |
| Petrolatum B | | | | | 8.3 | | |
| Petrolatum C | | | | | | 8.3 | |
| Petrolatum D | | | | | | | |

Alloy Powder: 97.5 Pb/1 Sn 1.5 Ag

| Example No. | 15 | 16 | 17 | 18 | 19 | 20 | 21 |
|---|---|---|---|---|---|---|---|
| % Metal Components | 93.0 | 93.0 | 93.0 | 93.0 | 93.0 | 93.0 | 93.0 |
| Petrolatum A | 3.9 | 5.0 | 5.0 | 5.0 | 3.9 | 3.9 | 3.9 |
| Triethanolamine | 1.6 | 1.0 | | | 1.6 | 1.6 | 2.3 |
| 7 parts NaOH dissolved in 93 parts Glycerine | | | | | 1.5 | | 0.8 |
| Armeen HT | 1.5 | 1.0 | | | | | |
| Ascorbic Acid | | | 2.0 | | | | |
| Stearic Acid | | | | 2.0 | | 1.5 | |

Alloy Powder: 97.5 Pb/1 Sn/1.5 Ag

| Example No. | 22 | 23 | 24 | 25 | 26 | 27 | 28 | 29 | 30 |
|---|---|---|---|---|---|---|---|---|---|
| % Metal Components | 93.0 | 85.0 | 85.0 | 85.0 | 85.0 | 85.0 | 85.0 | 85.0 | 85.0 |
| Petrolatum A | 3.9 | 8.3 | 8.3 | | | | 8.3 | 8.3 | 8.6 |
| Triethanolamine | 2.3 | 5.0 | 5.0 | 5.0 | 5.0 | 5.0 | 3.3 | 5.7 | 3.3 |
| 7 parts NaOH dissolved in 93 parts Glycerine | | 1.7 | | | | | | | |
| Stearic Acid | 0.8 | | 1.1 | 0.8 | 0.8 | 0.8 | 1.7 | 0.5 | |
| Glycerine | | | 0.6 | 0.9 | 0.9 | 0.9 | 1.7 | 0.5 | 1.5 |
| Cholic Acid | | | | | | | | | 1.6 |
| Pine Oil | | | | 8.3 | | | | | |
| Petrolatum B | | | | | 8.3 | | | | |
| Petrolatum C | | | | | | 8.3 | | | |
| Petrolatum D | | | | | | | | | |

Alloy Powder: 97.5 Pb/1 Sn/1.5 Ag

| Example No. | 31 | 32 | 33 | 34 | 35 |
|---|---|---|---|---|---|
| % Metal Components | 85.0 | 85.0 | 85.0 | 90.0 | 90.0 |
| Petrolatum A | 11.3 | 11.0 | 10.5 | 5.0 | 5.0 |
| Triethanolamine | 3.4 | 3.7 | 4.2 | 3.8 | 3.8 |
| Cholic Acid | 0.3 | 0.3 | 0.3 | 0.2 | 0.2 |
| Butyl Carbitol | | | | | 1.0 |
| Di-n-butyl Phthalate | | | | 1.0 | |

Alloy Powder: 10Sn/88Pb/2Ag

| Example No. | 36 | 37 | 38 | 39 | 40 | 41 | 42 |
|---|---|---|---|---|---|---|---|
| % Metal Components | 85.0 | 85.0 | 85.0 | 85.0 | 85.0 | 85.0 | 85.0 |
| Petrolatum A | 6.8 | 7.4 | 6.8 | 7.4 | 6.8 | 6.7 | 7.0 |
| Triethanolamine | 6.0 | 6.4 | 6.0 | 6.4 | 5.2 | 6.6 | 6.4 |
| Cholic Acid | 1.1 | 1.2 | 1.5 | | 2.2 | 0.9 | 0.4 |
| Glycerine | 1.03 | | 0.7 | 1.2 | 0.8 | 0.8 | 0.6 |
| NaOH | 0.07 | | | | | | 0.6 |

Alloy Powder: 10Sn/88Pb/2Ag

| Example No. | 43 | 44 | 45 | 46 | 47 | 48 | 49 |
|---|---|---|---|---|---|---|---|
| % Metal Components | 85.0 | 85.0 | 85.0 | 85.0 | 88.0 | 88.0 | 90.0 |
| Petrolatum A | 11.2 | 11.2 | 7.0 | 12.0 | 9.0 | 9.6 | 7.5 |
| Triethanolamine | 2.3 | 3.4 | 6.5 | 2.7 | 2.8 | 2.2 | 2.3 |
| Cholic Acid | | 0.4 | 0.3 | 0.3 | 0.2 | 0.2 | 0.2 |
| Glycerine | 1.2 | | 1.2 | | | | |
| NaOH | 0.3 | | | | | | |

Alloy Powder: 10Sn/88Pb/2Ag

| Example No. | 50 | 51 | 52 | 53 | 54 | 55 | 56 |
|---|---|---|---|---|---|---|---|
| % Metal Components | 94.0 | 85.0 | 90.0 | 90.0 | 90.0 | 90.0 | 90.0 |
| Petrolatum A | 4.5 | 12.0 | 7.2 | 7.0 | 7.1 | 6.8 | 6.8 |
| Triethanol Amine | 1.4 | 2.7 | 2.6 | 2.0 | 2.3 | 2.0 | 2.5 |
| Cholic Acid | 0.1 | 0.3 | 0.2 | 0.2 | 0.2 | 0.2 | 0.2 |
| Surfynol 104E | | | | 0.8 | 0.4 | 1.0 | 0.5 |

Alloy Powder: 10Sn/88Pb/2Ag

| Example No. | 57 | 58 | 59 | 60 | 61 | 62 | 63 |
|---|---|---|---|---|---|---|---|
| % Metal Components | 90.0 | 90.0 | 85.0 | 85.0 | 85.0 | 85.0 | 90.0 |
| Petrolatum A | 6.5 | 6.2 | 13.5 | 10.5 | 9.0 | 8.3 | 6.4 |
| Triethanolamine | 2.5 | 2.8 | 1.2 | 4.2 | 4.5 | 5.2 | 2.4 |
| Cholic Acid | 0.2 | 0.2 | 0.3 | 0.3 | 0.3 | 0.3 | 0.2 |
| Surfynol 104E | | | | | | | 0.1 |
| Di-n-butyl Phthalate | 0.8 | 0.8 | | | 1.2 | 1.2 | 0.9 |

Alloy Powder: 62Sn/36Pb/2Ag

| Example No. | 64 | 65 | 66 | 67 | 68 | 69 | 70 |
|---|---|---|---|---|---|---|---|
| % Metal Components | 85.0 | 85.0 | 85.0 | 85.0 | 85.0 | 85.0 | 85.0 |
| Petrolatum A | 8.3 | 8.3 | | | | | |
| Triethanolamine | 5.0 | 5.0 | 6.8 | 6.7 | 5.2 | 5.2 | 6.0 |
| 7 parts NaOH dissolved in 93 parts Glycerine | 1.7 | | | | | | |
| Cholic Acid | | 1.7 | 1.5 | 0.8 | 0.8 | 1.5 | 1.1 |
| Glycerine | | | 1.5 | 0.7 | 0.7 | 1.5 | 1.1 |
| Petrolatum C | | | 5.2 | 6.8 | 8.3 | 6.8 | 6.8 |

Alloy Powder: 62Sn/36Pb/2Ag

| Example No. | 71 | 72 | 73 | 74 | 75 | 76 |
|---|---|---|---|---|---|---|
| % Metal Components | 85.0 | 85.0 | 85.0 | 85.0 | 85.0 | 85.0 |
| Petrolatum A | | | | 9.0 | 6.0 | 12.0 |
| Triethanolamine | 3.7 | 1.5 | 6.8 | 6.0 | 9.0 | 2.7 |
| Cholic Acid | 2.3 | 3.0 | | | | 0.3 |
| Glycerine | 2.2 | 3.0 | | | | |
| Petrolatum C | 6.8 | 7.5 | 8.2 | | | |

Alloy Powder: 62Sn/36Pb/2Ag

| Example No. | 77 | 78 | 79 | 80 | 81 | 82 | 83 |
|---|---|---|---|---|---|---|---|
| % Metal Components | 85.0 | 85.0 | 85.0 | 85.0 | 85.0 | 85.0 | 85.0 |
| Petrolatum A | 7.5 | 9.0 | 7.5 | 8.2 | 4.5 | 6.0 | 7.5 |
| Triethanolamine | 7.2 | 5.2 | 7.5 | 5.4 | 5.3 | 4.5 | 3.8 |
| 7 parts NaOH dissolved in 93 parts Glycerine | | | | | 5.2 | 4.5 | 3.7 |
| Cholic Acid | 0.3 | | | | | | |
| Glycerine | | 0.8 | | 1.4 | | | |

Alloy Powder: 62Sn/36Pb/2Ag

| Example No. | 84 | 85 | 86 | 87 | 88 | 89 | 90 |
|---|---|---|---|---|---|---|---|
| % Metal Components | 85.0 | 85.0 | 85.0 | 85.0 | 85.0 | 85.0 | 85.0 |
| Petrolatum A | 7.5 | 4.5 | 8.5 | 9.5 | 11.0 | 13.0 | 8.5 |
| Triethanolamine | 3.8 | 3.8 | 2.5 | 1.3 | 1.3 | 1.0 | 4.6 |
| 7 parts NaOH dissolved in 93 parts Glycerine | 3.7 | 3.7 | 2.5 | 1.2 | 1.2 | 1.0 | 1.6 |
| Cholic Acid | | | | | | | 0.3 |
| Beta-Alanine | | 3.0 | 1.5 | 3.0 | 1.5 | | |

Alloy Powder: 62Sn/36Pb/2Ag

| Example No. | 91 | 92 | 93 | 94 | 95 | 96 | 97 |
|---|---|---|---|---|---|---|---|
| % Metal Components | 85.0 | 85.0 | 85.0 | 85.0 | 85.0 | 85.0 | 85.0 |
| Petrolatum A | 12.3 | 12.3 | 12.3 | 12.3 | 12.3 | 12.1 | 11.8 |
| Triethanolamine | 1.1 | 0.9 | 0.9 | 0.9 | 1.1 | 1.1 | 1.1 |
| 7 parts NaOH dissolved in 93 parts Glycerine | 1.1 | 0.9 | 0.9 | 0.9 | 1.1 | 1.1 | 1.1 |
| Butylcarbitol | 0.5 | 0.9 | | | 0.5 | 0.7 | |
| Dowanol DM | | | 0.9 | | | | |
| Dowanol DE | | | | 0.9 | | | |
| Terpineol | | | | | | | 1.0 |

Alloy Powder: 62Sn/36Pb/2Ag

| Example No. | 98 | 99 | 100 | 101 | 102 | 103 |
|---|---|---|---|---|---|---|
| % Metal Components | 90.0 | 85.0 | 85.0 | 85.0 | 85.0 | 85.0 |
| Petrolatum A | 7.8 | 10.6 | 10.6 | 11.7 | 11.6 | 11.5 |
| Triethanolamine | 1.6 | 1.5 | 1.5 | 0.5 | 0.5 | 0.5 |
| 7 parts NaOH dissolved in 93 parts Glycerine | 0.6 | 1.4 | 1.5 | 0.5 | 0.5 | 0.5 |
| Butylcarbitol | | 1.3 | 1.2 | 1.0 | 1.0 | 1.0 |
| Carbowax 3350 | | 0.2 | 0.2 | 0.3 | 0.4 | 0.5 |

Alloy Powder: 96.5 Sn/3.5Ag

| Example No. | 104 | 105 | 106 | 107 |
|---|---|---|---|---|
| % Metal Components | 80.0 | 80.0 | 80.0 | 80.0 |
| Petrolatum A | 16.0 | 16.4 | 16.4 | 15.3 |
| Triethanolamine | 3.6 | 3.6 | 3.6 | 3.5 |
| Cholic Acid | 0.4 | | | 0.4 |
| Butyl Carbitol | | | | 0.7 |
| 10% Florad FC 14 in Butyl Carbitol | | | | 0.1 |

Alloy Powder: 63Sn/37Pb

| Example No. | 108 | 109 | 110 | 111 | 112 | 113 | 114 |
|---|---|---|---|---|---|---|---|
| % Metal Components | 85.0 | 85.0 | 85.0 | 85.0 | 85.0 | 85.0 | 85.0 |
| Petrolatum A | 8.3 | 8.3 | 8.3 | 8.3 | 8.3 | 8.3 | 8.3 |
| Triethanolamine | 5.0 | 5.0 | 3.3 | 6.7 | 1.7 | 5.7 | 1.7 |
| 7 parts NaOH dissolved in 93 parts Glycerine | 1.7 | | | | | | |
| Glycerine | | | | | 5.0 | 1.0 | 1.3 |
| Cholic Acid | | 1.7 | 3.4 | | | | 1.2 |
| PEG 6000 | | | | | | | 2.5 |

Alloy Powder: 63Sn/37Pb

| Example No. | 115 | 116 | 117 | 118 | 119 | 120 | 121 | 122 |
|---|---|---|---|---|---|---|---|---|
| % Metal | 85.0 | 85.0 | 85.0 | 85.0 | 85.0 | 85.0 | 85.0 | 85.0 |
| Components | | | | | | | | |
| Petrolatum A | 10.0 | 6.8 | 4.5 | 6.0 | 7.5 | 6.0 | 4.5 | 8.5 |
| Triethanolamine | 1.0 | 6.0 | 5.3 | 4.5 | 3.8 | 3.8 | 3.8 | 2.5 |
| 7 parts NaOH dissolved in 93 parts Glycerine | | | 5.2 | 4.5 | 3.7 | 3.7 | 3.7 | 2.5 |
| Glycerine | 1.5 | 1.1 | | | | | | |
| Cholic Acid | 1.5 | 1.1 | | | | | | |
| PEG 6000 | 1.0 | | | | | | | |
| Beta Alanine | | | | | | 1.5 | 3.0 | 1.5 |

Alloy Powder: 63Sn/37Pb

| Example No. | 123 | 124 | 125 | 126 | 127 | 126 | 129 | 130 |
|---|---|---|---|---|---|---|---|---|
| % Metal | 85.0 | 85.0 | 85.0 | 85.0 | 90.0 | 90.0 | 90.0 | 90.0 |
| Components | | | | | | | | |
| Petrolatum A | 9.5 | 11.0 | 13.0 | 11.8 | 6.2 | 6.5 | 9.7 | 10.0 |
| Triethanolamine | 1.3 | 1.3 | 1.0 | 1.1 | 1.4 | 2.5 | 3.8 | 3.7 |
| 7 parts NaOH dissolved in 93 parts Glycerine | 1.2 | 1.2 | 1.0 | 1.1 | 1.4 | | | |
| Glycerine | | | | | | | | 0.2 |
| Cholic Acid | | | | | | 0.2 | 0.3 | 0.1 |
| PEG 6000 | 3.0 | 1.5 | | | | | | |
| Beta Alanine | | | | 1.0 | 0.6 | | | |
| Butylcarbitol | | | | | | 0.8 | 1.2 | |
| Di-n-butyl-Phthalate | | | | | 0.4 | | | |

Alloy Powder: 97.5Pb/1Sn/1.5Ag

| | |
|---|---|
| Example No. | 131 |
| % Metal Powder | 85.0 |
| Petrolatum A | 6.0 |
| Carbowax 3350* | .6 |
| Tetraethylene glycol | 0.0 |
| Butyl Carbitol** | 1.92 |
| Triethanolamine | 3.75 |
| 7 parts NaOH dissolved in 93 parts glycerine | 0.0 |
| Surfynol 104E*** | 0.0 |
| Floral A**** | 2.73 |

* Poly(oxy-1,2-ethandiyl),alpha-hydro-omega-hydroxy. (Reg. No.: 25322-68-3).

** 2-(butoxyethoxy)ethanol. (Reg. No.: 112-34-5).

*** 2,4,7,9-tetramethyl-5-decene-4,7-diol. (Reg. No.: 126-86-3).

**** Floral AK = hydrogenated wood rosin.

EXAMPLE 132

Petrolatum A, 95 parts, was blended thoroughly with 5 parts of triethanolamine to make a vehicle for a brazing paste. 30 parts of such vehicle was thoroughly blended with 70 parts of elemental copper powder, the copper powder being -150 mesh, to make a soft paste. No significant hot slump was observed upon testing on a copper coupon with the Reflow instrument.

A T-bar of an upright piece of steel temporarily wired to rest on and project from a horizontal flat piece of steel was made by applying the brazing paste deposit near one end of the interface between the pieces and heating the resulting assembly in a belt furnace. The assembly was maintained at 1121°C. for 10-20 minutes. The result was a good brazed joint between the pieces, with the brazing metal flowing into the joint by capillarity and exhibiting no appreciable spreading away from the joint.

EXAMPLE 133

Petrolatum A, 95 parts, was blended thoroughly with 5 parts of a clear solution of 7 parts of sodium hydroxide in 93 parts of glycerine to make a vehicle for a brazing paste. 30 parts of such vehicle was thoroughly blended with 70 parts of elemental copper powder like that of Example 132 to make a soft paste. The paste was tested for hot slump and brazing effectiveness like the paste of Example 132. No significant hot slump was observed. The resulting brazed joint was a good one, generally resembling that of Example 132.

EXAMPLE 134

The vehicle of Example 132 was used for making an infiltration paste. 20 parts of such vehicle was blended thoroughly with 80 parts of a powdered metalliferous infiltration composition to make a grainy paste.

To do this testing a coherent porous "green" (unsintered) compact of steel powder was coated approximately 6 mm thick all over with the paste. The metalliferous infiltration composition of the paste was a blend of elemental copper powder, a powdered copper-base alloy containing iron, a high green strength copper powder (SCM Corporation's HGS grade), silicon powder, and manganese powder; the infiltration composition had the following approximate net composition: 96.7% copper; 1.81% iron; 0.11% silicon; 0.32% zinc; and 1.00% manganese.

No hot slump of the deposit was observed upon testing with the Reflow instrument. The paste-coated compact was heated for three hours at 1232°C. to give a very efficient infiltration of the pores; 99% of the infiltration composition went into the compact, and only 1% residue was left; this easily brushed off from the surface of the resulting infiltrated and sintered compact.

EXAMPLE 135

The vehicle of Example 133 was used for making an infiltration paste. 20 parts of such vehicle was blended thoroughly with 80 parts of the powdered metalliferous infiltration compositions of Example 134 to make a grainy paste. The paste was tested for hot slump and infiltration effectiveness like the paste of Example 134. No significant hot slump was observed. The infiltration of the compact was quite good, but did not reach the dramatically high efficiency obtained in Example 134.

EXAMPLE 136

A soft paste was made by blending thoroughly 20 parts of vehicle with 80 parts of -80 mesh 316 L stainless steel powder. The vehicle was 90 parts of Petrolatum A blended with 10 parts of a solution of 7 parts of sodium hydroxide dissolved in 93 parts of glycerine. The paste was extruded into a fused silica boat as a squat cylindrical shape with a small pointy peak rising about 5 mm. from a position central to the top (somewhat resembling the shape of the familiar milk chocolate "kiss"). The boat then was placed into the 600°F. zone of a small electrically heated tube furnace through which hydrogen gas was flowing. The boat then was moved about 2.5 cm towards the top temperature zone of the furnace at 4-minute intervals until about 20 cm was traversed, then was moved the remaining approximately 5 cm into the top temperature zone (about 1121°C.) and held there for 8 minutes. The boat was removed to a hydrogen-protected cooling zone of the tube for 12 minutes to cool the resulting coherent sintered porous metal part to room temperature. The main body of the part retained the original shape of the extrudate with no significant hot slump. Only the pointy peak of the "kiss" had blunted a bit and had drooped somewhat.

EXAMPLE 137

A vehicle for a powdered metal paste was made by thoroughly blending 75 parts by weight of petrolatum with 5 parts by weight of a clear solution of 7 parts NaOH in 93 parts of glycerine. 10 parts by weight of butyl carbitol were added to make the vehicle portion.

30 parts by weight of the foregoing vehicle was blended thoroughly with 70 parts of 316L - stainless steel powder -100

mesh size with 35-50% -325 mesh to form a soft paste.

The paste was tested for hot slump by application to a copper coupon and heating on a Browne Corporation reflow instrument at 330°C. No significant hot slump was observed.

EXAMPLE 138

A vehicle for powdered copper metal was made consisting of 82% petrolatum and 18% of a 7% NaOH- glycerine solution.

90 parts by weight copper shot (-20 + 80 mesh) was hand blended with 10 parts by weight of the vehicle. The resulting paste was applied to a vertical and a ~ 30° angled surface (steel) in a 1" circular and a 1" square preform shape. These panels were heated in a furnace.

The best furnace was run at 1800°F. for 30 minutes with 300 cubic feet per hour of dissociated ammonia gas.

Both forms sintered. The leading edges into the belt furnace oxidized and did not sinter. Both samples held their respective shapes. The leading edges and leading corners of the preforms set at a 30° angle slumped presumably when the vehicle vaporized.

Thus, the vehicle successfully held the shot together up to sintering temperature. Any slumping that occurred is attributed to the oxidized/unsintered leading loose shot edge.

EXAMPLE 139

The present example illustrates the present invention with a hard surfacing paste.

The vehicle was formed in the manner indicated above (as for example in Example 137) by blending the following ingredients in the amounts indicated.

| | |
|---|---|
| Petrolatum | 65.0 parts |
| Triethanolamine | 25.0 parts |
| Cholic acid | 2.0 parts |
| Dibutylphthalate | 8.0 parts |

The powdered hard metal nickel alloy had the following elemental analysis:

| | |
|---|---|
| Carbon | 0.64% |
| Silicon | 4.24% |
| Chromium | 14.27% |
| Cobalt | 6.01% |
| Iron | 4.65% |
| Boron | 3.08% |
| Nickel | Balance |

The sieve analysis was:

| | |
|---|---|
| +115 mesh | 0.0% |
| +150 mesh | Trace |
| +200 mesh | 21.8% |
| +325 mesh | 56.3% |
| -325 mesh | 21.9% |

Ten parts by weight of the vehicle were thoroughly blended with 90 parts by weight of the hard metal powder. The resulting paste was applied to a steel bar:

a) on a vertical face,

b) on a flat angled surface (30°-45°) as

i) a circle 0.74" X 0.125" thick
ii) a square 1" X 1" X 0.312" thick

c) on a flat horizontal steel surface in the forms indicated in (b) above.

The preforms were then heated in a traveling belt furnance under the following conditions.

| | |
|---|---|
| Belt speed - | 1"/minute (~ 30 mins. in hot zone) |
| Preheat - | 600°F. |
| Hot Zone - | (a) Run 1 - 1800°F. |
| | (b) Run 2 - 1900°F. |
| | (c) Run 3 - 2000°F. |
| Atmosphere - | Dissociated ammonia. |

<u>Results:</u>

Run 1: No melting, no apparent powder oxidation. All forms held their original shapes and approximate dimensions. Some cracks developed.

Run 2: Melting started on the vertical sample. No melting on all other samples which held their original shape and dimensions. Cracks developed where powder fell apart when the vehicle vaporized.

Run 3: Vertical sample melted and the angled sample began to melt, but held shape with some shrinkage. Vertical sample began to run downwards and brazed to steel bars together.

Conclusion:

The vehicle restrained slumping and allowed the paste to retain its shape up to melting temperature of the alloy. Not all samples melted, possibly because of the large thermal mass of the steel bars.

EXAMPLE 140

This example is to test sinter a bronze part for application to the Anatoli Michaelson hollow core mold process using a thinner porous core mold using a bronze paste.

The paste was made in the manner illustrated in the preceding examples according to the following formulation:

| | |
|---|---|
| Copper Powder | 77 w/% |
| Tin Powder | 8.5 w/% |
| No slump Vehicle (Example VI) | 14.5 w/% |

The paste was hand applied to refractory shapes in a thickness ranging from 0.125 to 0.25". One refractory shape was a graphite triangle and the other an etched alumina rod.

The samples were placed on a thin alumina substrate on a belt furnace under the following conditions.

| | |
|---|---|
| Belt Spred | 1.5"/min. |
| Preheat | 600°F. (~10 mins.) |
| Hot Zone | 1540°F. (~15 mins.) |
| Atmosphere | Dissociated Ammonia |

The parts were sintered. When the graphite triangle (spacer) was cut in half, the bronze separated and showed good surface integrity. Slight slumping was observed.

It was indicated in this example that the sintering time and temperature were not optimal, but the concept worked.

The instant vehicles also are useful for so-called "functional" or "thick film" pastes for microelectronic circuit production. These pastes often contain very finely-divided noble or non-noble elemental metals and alloys and metal oxides such as those of ruthenium, lead, etc., to modify resistivity; glass-forming or ceramic-forming powder is a fundamental component of such pastes. They usually are screenprinted and fired on a substrate to obtain effective adhesion of the powdered components one to another and to a substrate.

The fired products are used as dielectrics, conductors, resistors, and capacitors. Their paths for conducting electricity need good line definition. Therefore, lack of significant hot slump and accompanying shape change and thickness change from the original paste deposit(s) is essential, and the inventive vehicles can provide that control.

Their firing profile (time and temperature) often is delicate and different for various compositions and substrates. Typically firing peak temperature, for example, with a platinum-silver alloy or palladium-gold alloy powder-containing paste on an alumina substrate to make a conductor will be 850-950°C.; for sodalime glass substrate such peak is 550-660°C.; for porcelain-enameled steel substrates such peak is 625-675°C.

The metal or alloy powder in those special pastes usually is smaller than 10 microns in effective diameter, often being as fine as 2 microns or of submicron size. Normally such powder is spherical; sometimes it is in the form of flake. The powder components useful here can include pure gold, silver, copper, etc., as well as an alloy containing same, or can be all glass-formers or ceramic-forming compositions without elemental metal content. The vehicle for such paste is in minor proportion relative to that of the powdered components to be adhered together by the firing. Gold, platinum and palladium containing pastes usually are fired in air, while copper-bearing ones are fired in a protective atmosphere such as nitrogen.

Without the necessary antislump systems of this invention, the hydrocarbon itself imparts no significant anti-hot slump or molten metal flow restriction effects to pastes containing subject metal powders. However, the presence of a relatively small proportion of an alkali particularly with a polyol and within the broad ranges hereinbefore described exerts substantially enhanced anti-hot slump effect and molten metal flow restriction effect than is exerted by the same antislump system without the alkali and used in a larger proportion within said broad ranges.

Accordingly, it should be evident that one skilled in the art of formulating metal powder-bearing pastes now has a way for: controlling hot slump to a user's desired specification by formulating for diminishing such slump modestly or even clear down to practically zero; and for imparting, where necessary or desired, restriction of flow of the molten metal anywhere from a modest desired proportion down to insignificance. The combination in the instant vehicle of hydrocarbon/antislump agent-flux system as defined herein provides such control.

## CLAIMS

1. An improved essentially nonaqueous noncorrosive inorganic saltfree paste vehicle for soft solder metal powder, said vehicle comprising petrolatum in which is dispersed in a proportion effective for diminishing hot slump of said metal powder when it is compounded with said vehicle, a nonaqueous organic liquid, having a surface tension of from 43 to 65 or higher dynes/cm. at 20°C., and a noncorrosive anhydrous flux.

2. A paste vehicle for soft solder metal powder according to claim 1, wherein said nonaqueous organic liquid is a liquid polyol having a surface tension of from 43 to 65 or higher dynes/cm. at 20°C.

3. A paste vehicle for soft solder metal powder according to claim 2, wherein a base is present dispersed in said liquid polyol.

4. A paste vehicle according to claim 3, in which said base is an amino alcohol or an amino alkane in a proportion between about 2% and about 40%.

5. A paste vehicle according to claim 3, in which the base is sodium hydroxide in a proportion between about 0.05% and about 5%.

6. A paste vehicle according to claim 3, compounded for use with soft solder powder wherein said base is an amine and the vehicle also contains carboxylic acid.

7. A paste vehicle according to claim 6, wherein said carboxylic acid is polycyclic.

8. A paste vehicle according to claim 7, wherein said carboxylic acid is cholic acid or a rosin acid.

9. A paste vehicle according to claim 8, wherein said rosin acid is principally abietic acid.

10. A paste vehicle according to claim 9, wherein said amine is triethanolamine.

11. A paste vehicle according to claim 6, wherein said base comprises triethanolamine, and the vehicle is further characterized by the presence of surfactant.

12. A paste vehicle according to any one of the preceding claims, which is further characterized by the presence of one or more of a surfactant, plasticizer and diluent.

13. A paste vehicle according to claim 12, wherein a diluent is present and at least a portion of said diluent is practically water insoluble.

14. A paste vehicle of claim 13, wherein said diluent comprises a phthalate ester or a terpene alcohol.

15. A paste vehicle of claim 14, wherein said diluent is dibutyl phthalate.

16. A paste vehicle according to any one of the preceding claims, wherein said liquid polyol comprises glycerine.

17. A soft solder paste comprising:

a) from 75 to 95 weight parts per 100 parts of paste composition of a soft solder metal powder composition having a particle size of from -200 to +400 mesh (U.S. Standard Screen), and

b) from 5 to 25 weight parts per 100 parts of paste composition of a paste vehicle as claimed in any one of the preceding claims.

18. A soft solder paste which is a modification of the paste according to claim 17, wherein the petrolatum is replaced by another heat liquifiable hydrocarbon ranging from semi solid at room temperature to fugitive from metal powder at the fusion temperature thereof.

19. A nonaqueous noncorrosive inorganic salt free soft solder paste according to either of claims 17 and 18, wherein the flux is a basic reacting flux.

20. A nonaqueous noncorrosive inorganic salt free salt solder paste according to claim 19, wherein said basic reacting flux comprises a trialkylamine in which the alkyl group is selected from the same or different alkyl groups containing from 2 to 6 carbon atoms.

21. A nonaqueous noncorrosive inorganic salt free soft solder paste according to claim 19, in which the flux is an alkali metal hydroxide or an alkali metal alcoholate.

22. A nonaqueous noncorrosive inorganic salt free

soft solder paste according to claim 21, in which sodium hydroxide is dissolved in or reacted with the polyol.

23. A paste according to any one of claims 17-22, comprising from about 75-95 parts of powdered soft solder alloy which has particle size not substantially larger than about 100 mesh.

24. A paste according to claim 23, where said powdered soft solder alloy is a tin-containing alloy which melts below 330°C.

25. A paste according to claim 18, wherein the hydrocarbon is a hydrogenated polymeric hydrocarbon having a softening point in the range of 15° to 130°C.

26. A nonaqueous noncorrosive inorganic salt free powdered soft solder paste composition comprising from 75 to 95% by weight of a powdered soft metal or powdered soft solder metal alloy having a particle size finer than 100 mesh (U.S. Standard Sieve Size) and from 5% to 25% by weight of a nonaqueous organic liquid having a surface tension of from 45 to 65 dynes/cm. at 20°C. and a noncorrosive anhydrous flux.

27. A nonaqueous powdered metal paste characterized by resistance to slumping during heating to the fusion point of the metal moiety of the paste comprising from 60 to 90 parts by weight of a powdered metal, powdered metal alloy or a blend of powdered metals having a melting point above 500°C. and having a particle size less than 20 mesh (U.S. Standard Sieve Size), and from 0 to 39 parts by weight of a natural or synthetic hydrocarbon having a melting point above 15°C. and below the fusion point of the metal or metal alloy powder, and from 0.5 to 40 parts by weight of a nonaqueous organic liquid compound having a surface tension of from 43 to 65 or higher dynes/cm. at 20°C.

28. A nonaqueous paste according to claim 27, wherein the nonaqueous organic liquid is a polyhydric alcohol or is selected from diethanolamine and triethanolamine.

29. A nonaqueous paste according to claim 27, wherein said nonaqueous organic liquid is a polyhydric alcohol and

there is further present an alkali metal hydroxide.

30. A nonaqueous paste according to claim 28, wherein the polyhydric alcohol is glycerine.

31. A nonaqueous paste according to any one of claims 27-30, wherein the powdered metal paste is a brazing paste and the metal is copper.

32. A nonaqueous paste according to any one of claims 27-30, wherein the metal alloy is a copper alloy or a hard facing nickel alloy.

33. A nonaqueous paste according to claim 32, wherein the copper alloy is copper/silver alloy or copper/iron alloy.

34. A nonaqueous paste according to any one of claims 27-30, wherein the powdered metal blend is a mixture of copper powder and tin powder.

35. A nonaqueous paste according to any one of claims 27-34, wherein the hydrocarbon is petrolatum or a hydrogenated hydrocarbon polymer.

36. A nonaqueous paste according to any one of claims 27-35, also containing a metal oxide or a ceramic forming powder.